Europäisches Patentamt

European Patent Office

Office européen des brevets

(19)

(11) Veröffentlichungsnummer: **0 193 521 B1**

(12) **EUROPÄISCHE PATENTSCHRIFT**

(45) Veröffentlichungstag der Patentschrift: **10.07.91**

(51) Int. Cl.⁵: **G01N 19/02**

(21) Anmeldenummer: **86890039.0**

(22) Anmeldetag: **20.02.86**

(54) **Vorrichtung zum Messen der Griffigkeit von Flächen, insbesondere von Verkehrsflächen, wie Strassendecken.**

(30) Priorität: **26.02.85 AT 569/85**

(43) Veröffentlichungstag der Anmeldung:
**03.09.86 Patentblatt 86/36**

(45) Bekanntmachung des Hinweises auf die
Patenterteilung:
**10.07.91 Patentblatt 91/28**

(84) Benannte Vertragsstaaten:
**BE CH DE FR GB IT LI LU NL SE**

(56) Entgegenhaltungen:
**DE-A- 2 921 677**
**DE-B- 1 902 773**
**DE-B- 2 148 362**
**DE-C- 1 104 734**
**US-A- 4 051 713**

(73) Patentinhaber: **Augustin, Harald Dr.**
**Arsenal Objekt 7/4/16**
**A-1030 Wien(AT)**

(72) Erfinder: **Augustin, Harald Dr.**
**Arsenal Objekt 7/4/16**
**A-1030 Wien(AT)**

(74) Vertreter: **Gibler, Ferdinand, Dipl.Ing. Dr.
techn.
Dorotheergasse 7/14
A-1010 Wien(AT)**

EP 0 193 521 B1

**Beschreibung**

Die Erfindung bezieht sich auf eine Vorrichtung zum Messen der Griffigkeit von Flächen, insbesondere Verkehrsflächen, wie Straßendecken, Bodenbeläge u.dgl. mit einem auf der Fläche abstützbaren Tragwerk für die Welle eines um eine zur Fläche senkrechten Achse rotierenden, mit zumindest einem Kontaktorgan bestückten Rotors und eine Meßeinrichtung zum Messen der über dieses an die Fläche mit Reibung anlegbaren Kontaktorgan jeweils vom Rotor aufgenommenen Drehmomente.

Eine derartige Einrichtung wurde z.B. durch die US-PS 4 051 713 bekannt. Mit dieser Einrichtung ist es möglich, die Griffigkeit eines Bodenbelages im trockenen Zustand zu messen.

In vielen Fällen ist es jedoch erwünscht, die Griffigkeit eines Bodenbelages auch unter anderen Bedingungen, z.B. im nassen Zustand oder im mit verschiedenen Flüssigkeiten benetzten Zustand zu messen.

Weiters wurde durch die DE-OS 21 48 362 ein Prüfgerät zur Prüfung des Abriebes an einem Prüfkörper aus Fahrbahndeckenmaterial mit einer ersten Antriebsvorrichtung zur Herbeiführung einer Auf- und Abbewegung mindestens eines die den Abtrieb bewirkenden Fahrzeugräder imitierenden Belastungsteils bekannt. Bei dieser Einrichtung ist ein zweiter Antrieb zum Antreiben des Prüfkörpers zur Nachahmung einer horizontalen Relativbewegung zwischen Fahrzeugrädern und Fahrdecke vorgesehen. Dabei ist der Belastungsteil von einem Teilstück eines Kraftfahrzeugreifens gebildet, das an einem auf- und abbewegbaren Teil der ersten Antriebsvorrichtung befestigbar und mit einem einstellbaren Druck belastbar ist. Bei dieser bekannten Einrichtung ist weiters ein Hahn vorgesehen, durch den Flüssigkeit in den Bereich des Prüfkörpers ausfließen gelassen werden kann. Dabei ergibt sich aber eine Verschmutzung der Umgebung.

Ziel der Erfindung ist es, eine Vorrichtung der eingangs erwähnten Art vorzuschlagen, die eine Messung der Griffigkeit eines Bodenbelages unter mit verschiedenen Flüssigkeiten benetztem Zustand ermöglicht, wobei eine Verschmutzung der Umgebung vermieden werden soll.

Erfindungsgemäß wird dies dadurch erreicht, daß eine Zuführleitung für eine Flüssigkeit für einen vom Tragwerk der Rotorwelle im Bereich des Rotors seitlich umschlossenen Raum vorgesehen ist und daß zu dessen seitlicher Abdichtung das Tragwerk auf seiner Unterseite eine Ringdichtung aufweist.

Durch diese Maßnahmen ist es auf einfache Weise möglich, den Bodenbelag im Bereich der Prüffläche mit bestimmen Flüssigkeiten, wie Wasser, Öl-Wasser-Emulsionen u.dgl. zu benetzen, wobei durch die Abdichtung des den Rotor seitlich umgebenden Raumes sichergestellt ist, daß die Benetzung auf den Bereich der Prüffläche begrenzt bleibt, wodurch eine Verschmutzung der Umgebung vermieden wird.

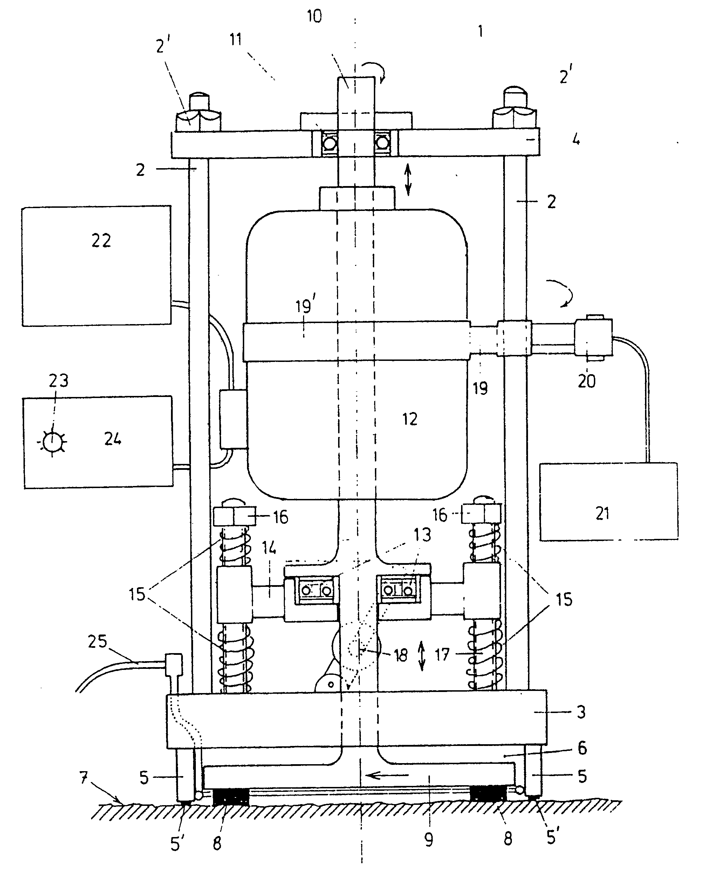

Die Erfindung wird nun anhand der Zeichnung näher erläutert, die eine Seitenansicht eines Ausführungsbeispieles einer erfindungsgemäßen Vorrichtung zeigt.

Diese Vorrichtung umfaßt ein Tragwerk 1, bestehend aus zwei (oder mehr) Stehern 2, deren untere Enden in einer Basis 3 verschraubt sind und deren obere Enden an einem Holm 4 (oder einer Deckplatte) mit Schraubmuttern 2' befestigt und zusammengehalten sind. Die Basis 3 ruht auf einem Basisring 5, der an seiner Unterseite eine Dichtung 5' trägt und einen solcherart abgedichteten Raum 6 umschließt, in dem der auf einer Fläche 7, z.B. auf dem Belag einer Verkehrsfläche, aufsetzbare, mit Kontaktorganen 8 bestückte Rotor 9 arbeitet.

Bei den Kontaktorganen 8 kann es sich um Gummi- oder Kunststoffkörper handeln, die in der Drehrichtung des Rotors 9 vorne eine abgeschrägte und/oder ausgerundete Anlauffläche aufweisen und somit ähnlich wie ein Fahrzeugreifen mit der Fläche 7 in Kontakt treten.

Der Rotor 9 ist am unteren Ende einer Rotorwelle 10 angeordnet, die das Tragwerk 1 über dessen volle Höhe durchsetzt und im Bereich des oberen Endes im Lager 11 des Holmes 4 höhenbeweglich lagert.

Diese Rotorwelle 10 lagert ihrerseits koaxial einen elektrischen Antriebsmotor 12. Mittels eines festen, also an der Welle 10 unverschiebbaren Lagers 13 wird die Rotorwelle 10 in einer Halterung 14 gehalten, die von achsparallelen Schraubenfedern 15 beeinflußt ist. Der von diesen Schraubenfedern 15 auf die Halterung 14 und damit über die Rotorwelle 10 auf den Rotor 9 ausgeübte Druck gegen die Fläche 7 ist mittels Schraubenmuttern 16, die das Widerlager für die Schraubenfedern 15 verkörpern und auf den in der Basis 3 befestigten Federbolzen 17 verschraubt sind, beliebig regelbar.

Eine mittels eines Hebels 18 betätigbare Verstellvorrichtung ermöglicht es, den Rotor 9 aus einer - in der Zeichnung dargestellten - Arbeitsstellung, in der er auf der Fläche 7 mit regelbarem Druck aufliegt, in eine Ruhestellung, in der er von dieser Fläche 7 einen Abstand aufweist, anzuheben.

Der Motor 12, der auf die Rotorwelle 10 das zur Drehung des Rotors 9 erforderliche Drehmoment auszuüben hat, wird hiezu seinerseits durch einen vom Gehäuse radial ausragenden Arm 19 an einem der Steher 2 gegen Drehung festgehalten, wobei zwischen diesem, am Motorgehäuse mittels einer Schelle 19' befestigten Arm 19 und dem Steher 2 ein Drehmoment-Messer, z.B. eine Meßdose, 20 angeordnet werden kann, um das jeweils
vom Rotor 9 auf die Fläche 7 ausgeübte Drehmoment und damit den Reibungswiderstand (die Griffigkeit) dieser Fläche 7 zu messen. Anstelle eines
solchen Drehmomentmessers 20 kann aber im
Rahmen der Erfindung auch jedwede andere
Drehmoment-Meßvorrichtung eingesetzt werden,
beispielsweise eine der Rotorwelle 10 unmittelbar
zugeordnete Drehmoment-Meßvorrichtung.

Die von der Meßdose 20 od.dgl. gelieferten
Meßergebnisse können gewünschtenfalls in einer
Registriervorrichtung, z.B. einem Meßschreiber 21,
festgehalten werden.

Der Motor 12 erhält Strom aus einer üblichen
stationären oder transportablen Stromquelle 22 und
zur Regelung der Motor-Drehzahl ist ein, gegebenenfalls mit einem Thyristor 23 arbeitender, Drehzahlregler 24 vorgesehen.

Um die Griffigkeit der Fläche 7 unter Sonderbedingungen prüfen und messen zu können, ist
dem vom Tragwerk 1 der Rotorwelle 10 im Bereich
des Rotors 9 umschlossenen, gegebenenfalls mit
der Dichtung 5' abgedichteten Raum 6 eine Zufuhrleitung 25 für eine beliebig wählbare Flüssigkeit,
z.B. Wasser, Ölemulsion, Reinigungsmittel u.dgl.,
anschließbar.

Selbstverständlich ist die Erfindung in ihren
Einzelheiten mannigfaltig abwandelbar und durchaus nicht an die im Ausführungsbeispiel dargestellten und erläuterten Merkmale gebunden.

## Ansprüche

1. Vorrichtung zum Messen der Griffigkeit von
   Flächen, insbesondere Verkehrsflächen, wie
   Straßendecken, Bodenbeläge u.dgl. mit einem
   auf der Fläche (7) abstützbaren Tragwerk (1)
   für die Welle (10) eines um eine zur Fläche (7)
   senkrechten Achse rotierenden, mit zumindest
   einem Kontaktorgan (8) bestückten Rotors (9)
   und eine Meßeinrichtung (20) zum Messen der
   über dieses an die Fläche (7) mit Reibung
   anlegbaren Kontaktorgan (8) jeweils vom Rotor
   (9) aufgenommenen Drehmomente,
   **dadurch gekennzeichnet,**
   daß eine Zuführleitung (25) für eine Flüssigkeit
   für einen vom Tragwerk (1) der Rotorwelle (10)
   im Bereich des Rotors (9) seitlich umschlossenen Raum (6) vorgesehen ist und daß zu dessen seitlicher Abdichtung das Tragwerk auf
   seiner Unterseite eine Ringdichtung (5, 5') aufweist.

## Claims

1. Apparatus for measuring the anti-skid property
   of surfaces, in particular traffic surfaces, such as roadway pavings, floor coverings and the
like, comprising a supporting framework (1)
which can be supported on the surface (7), for
the shaft (10) of a rotor (9) rotating about an
axis perpendicular to the surface (7) and
equipped with at least one contact member
(8), and a measuring device (20) for measuring
the torque absorbed in each case by the rotor
(9) via this contact member (8) which can be
placed with friction onto the surface (7), characterized in that a feed line (25) for a liquid is
provided for a space (6) laterally enclosed in
the area of the rotor (9) by the supporting
framework (1) of the rotor shaft (10), and in
that, to laterally seal the space (6), the supporting framework has an annular seal (5, 5') on its
underside.

## Revendications

1. Dispositif pour la mesure de la glissance de
   surfaces, en particuliers de voies routières, tels
   que des revêtements de chaussées, des dallages et analogues, avec un châssis (1) reposant
   sur la surface (7) pour un arbre (10) d'un
   volant (9) qui tourne suivant un axe perpendiculaire à la surface (7) et qui est équipé d'au
   moins un organe de contact (8) et avec un
   équipement de mesure (20) pour mesurer le
   couple recueilli par le volant (9) du fait de
   l'organe de contact (8) appliqué à frottement
   sur la surface (7), caractérisé en ce qu'une
   conduite de distribution (25) pour un liquide
   est prévue pour une enceinte (6) entourant
   latéralement la zone du volant (9) du châssis
   (1) de l'arbre (10) et en ce qu'il comprend une
   garniture annulaire (5, 5') pour assurer l'étanchéité latérale du châssis à sa face inférieure.